# DEMANDE DE BREVET EUROPEEN

(11) **EP 4 722 555 A1**
(43) Date de publication de la demande: **08.04.2026**
(21) Numéro de dépôt: 25206522.2
(22) Date de dépôt: 02.10.2025
(51) Int. Cl.: F16D 65/10

(54) **ENSEMBLE DE FREINAGE À TAMBOUR POUR VÉHICULE**

(30) Priorité: 03.10.2024 FR 2410696
(71) Demandeur: Renault s.a.s, 92100 Boulogne Billancourt (FR)
(72) Inventeur: MAGNIN, Christophe, 72000 LE MANS (FR)

(57) **Abrégé**

Cet ensemble (1) de freinage pour véhicule comprend un tambour (2) de frein destiné à être solidaire d'une roue du véhicule et muni d'une surface cylindrique extérieure (6) et d'une piste de freinage (8) formée par une surface cylindrique intérieure (7) opposée à la surface cylindrique extérieure (6), et un plateau (3) de frein comprenant une portion (11) d'extrémité radiale externe orientée sensiblement radialement et disposé en regard dudit tambour (2) de frein d'un côté intérieur du véhicule. La surface cylindrique extérieure (6) s'étend vers le côté intérieur du véhicule de manière à couvrir une face (12) d'extrémité radiale externe de la portion (11) d'extrémité radiale externe du plateau (3) de frein.

## Description

### Domaine technique

L'invention porte sur un ensemble de freinage à tambour pour véhicule automobile.

### Techniques antérieures

Généralement, les véhicules automobiles comportent un système de freinage qui comprend une pédale de frein agissant sur un maître-cylindre pour transmettre, par l'intermédiaire de circuits hydrauliques, une pression de fluide vers des dispositifs de freinage qui agissent sur chaque roue du véhicule.

Un dispositif de freinage, connu en soi et largement utilisé, comporte un tambour de frein comprenant une surface cylindrique intérieure appelée piste de freinage, qui est destinée à recevoir la pression de deux segments de frein qui s'écartent l'un de l'autre sous l'effet d'un vérin hydraulique de commande.

Dans le cadre du développement des tambours de frein, il est intéressant d'augmenter la dimension radiale de la piste de freinage. En effet, une piste de freinage de plus grande dimension radiale offre une surface de contact plus importante avec les segments de frein. Cela se traduit par une meilleure capacité de freinage et de dissipation de la chaleur générée lors du freinage avec une durabilité accrue.

Cependant, le tambour doit avoir d'une part une épaisseur minimale suffisante pour une bonne tenue aux sollicitations thermomécaniques. En effet, en augmentant la dimension radiale de la piste de freinage, il est nécessaire pour une épaisseur donnée du tambour d'augmenter le diamètre extérieur du tambour.

D'autre part, le diamètre extérieur du tambour ne doit pas dépasser une dimension maximale admissible sous peine d'incompatibilité avec le matériel de production existant.

Par ailleurs, pour protéger l'intérieur du tambour de frein, on utilise classiquement un plateau de frein posé en regard du tambour de frein, de manière à créer des chicanes rendant difficile l'accès de l'eau ou des poussières à l'intérieur du tambour de frein. Généralement, pour assurer convenablement cette protection, l'extrémité radiale du plateau de frein s'étend jusqu'à proximité du diamètre extérieur du tambour.

Dès lors, on comprend que l'augmentation de la dimension radiale d'une piste de freinage classique nécessite une modification conjointe du tambour et du plateau de frein de sorte à pouvoir respecter simultanément les contraintes mentionnées d'épaisseur minimale, de diamètre extérieur maximal et de protection contre l'eau et les poussières.

### Exposé de l'invention

Au vu de ce qui précède, l'invention a pour but de proposer un ensemble de freinage à tambour pour véhicule protégé contre l'intrusion d'eau ou des poussières et qui présente une piste de freinage de grande dimension et un diamètre extérieur qui ne dépasse pas un diamètre maximal admissible.

L'invention a pour objet un ensemble de freinage pour véhicule comprenant un tambour de frein destiné à être solidaire d'une roue du véhicule et muni d'une surface cylindrique extérieure et d'une piste de freinage formée par une surface cylindrique intérieure opposée à la surface cylindrique extérieure, et un plateau de frein comprenant une portion d'extrémité radiale externe orientée sensiblement radialement et disposé en regard du tambour de frein d'un côté intérieur du véhicule. La surface cylindrique extérieure s'étend vers le côté intérieur du véhicule de manière à couvrir une face d'extrémité radiale externe de la portion d'extrémité radiale externe du plateau de frein. Cette caractéristique offre une protection contre l'intrusion d'eau ou des poussières.

Selon une caractéristique, la surface cylindrique extérieure couvre intégralement la face d'extrémité radiale externe de la portion d'extrémité radiale externe du plateau de frein. Cette caractéristique améliore encore la protection contre l'intrusion d'eau ou des poussières.

Avantageusement, le plateau de frein est muni d'une languette comprenant une partie de fixation fixée rigidement sur la portion d'extrémité radiale externe et une partie en console s'étendant axialement dans une chambre de réception formée à partir d'une surface latérale du tambour de frein. Une telle configuration améliore encore la protection contre l'intrusion d'eau ou des poussières.

De préférence, la languette comprend un rebord s'étendant radialement vers la surface cylindrique extérieure du tambour de frein.

Selon une autre caractéristique, la partie en console s'étend radialement dans la chambre de réception. Cette caractéristique favorise l'évacuation des eaux d'infiltration.

Avantageusement, la chambre de réception est munie d'une gorge intérieure de manière à former un larmier. La présence d'une telle gorge permet d'éviter le ruissellement des eaux d'infiltration vers l'intérieur de l'ensemble de freinage.

Selon une autre caractéristique, la gorge intérieure est disposée entre la surface cylindrique extérieure du tambour de frein et la languette du plateau de frein.

Par exemple, le tambour de frein a un diamètre extérieur inférieur ou égal à 300 mm.

Par exemple, la piste de freinage a un diamètre sensiblement égal à 254 mm.

Selon un autre aspect, l'invention a pour objet un véhicule muni d'au moins un ensemble de freinage tel que défini ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue partielle en coupe axiale d'un ensemble de freinage selon un exemple de réalisation de l'invention ; et
[Fig 2] est une vue de détail d'une interface entre un tambour et un plateau de frein de l'ensemble de freinage de la [Fig 1].

### Exposé détaillé d'au moins un mode de réalisation

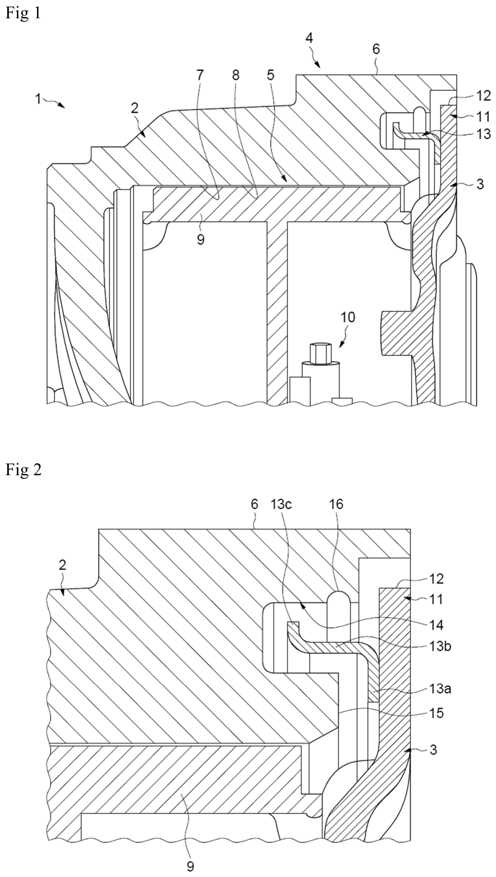

On a représenté sur la figure 1, en coupe axiale, une partie d'un ensemble 1 de freinage pour véhicule selon un exemple de réalisation de l'invention. L'ensemble 1 de freinage comprend un tambour 2 de frein solidaire d'une roue (non illustrée) du véhicule et associé à un plateau 3 de frein. Le tambour 2 de frein comprend une extrémité radiale extérieure 4 et une extrémité radiale intérieure 5.

Le tambour 2 de frein est muni à son extrémité radiale extérieure 4, d'une surface cylindrique extérieure 6.

Le tambour 2 de frein est muni à son extrémité radiale intérieure 5, d'une surface cylindrique intérieure 7 opposée à la surface cylindrique extérieure 6. Les surfaces cylindriques intérieure 7 et extérieure 6 délimitent l'épaisseur axiale du tambour 2 de frein.

La surface cylindrique intérieure 7 forme une piste de freinage 8 destinée à recevoir la pression de deux segments de freins 9 qui s'écartent l'un de l'autre sous l'effet par exemple d'un actionneur mécatronique 10. Il reste bien entendu possible de prévoir d'autres types d'actionneurs connus et compatibles avec l'application envisagée.

Le plateau 3 de frein est disposé en regard du tambour 2 de frein d'un côté intérieur du véhicule et est fixé à un essieu (non représenté) portant la roue du véhicule.

Le plateau 3 de frein comprend une portion 11 d'extrémité radiale externe qui est orientée sensiblement radialement.

Avantageusement, la surface cylindrique extérieure 6 s'étend vers le côté intérieur du véhicule de manière à couvrir une face 12 d'extrémité radiale externe de la portion 11 d'extrémité. De préférence, la surface cylindrique extérieure 6 couvre intégralement la face 12. En variante, il reste possible que la surface cylindrique extérieure 6 ne couvre que partiellement la face 12.

La figure 2 est une vue de détail de l'interface entre le plateau 3 et le tambour 2 de la figure 1. Il est à noter que des éléments identiques ou similaires portent les mêmes références d'une figure à une autre.

Le plateau 3 de frein est muni d'une languette 13 comprenant une partie de fixation 13a et une partie en console 13b. La partie de fixation 13a est fixée rigidement sur la portion 11 d'extrémité radiale externe. La fixation de la partie de fixation 13a sur la portion 11 d'extrémité radiale externe est réalisée par tout moyen de fixation rigide connu et compatible, par exemple de la soudure ou du vissage.

La languette 13 est disposée d'un côté extérieur du véhicule par rapport à la portion 11 d'extrémité radiale externe. La partie en console 13b s'étend axialement dans une chambre 14 de réception formée à partir d'une surface latérale 15 du tambour 2 de frein.

Avantageusement, la languette 13 comprend à une extrémité libre un rebord 13c s'étendant radialement vers la surface cylindrique extérieure 6 du tambour 2 de frein.

Selon un mode de réalisation non illustré, la partie en console 13b s'étend à la fois axialement et radialement dans la chambre 14 de réception.

Tel qu'illustré sur la figure 2, la chambre de réception 14 est munie d'une gorge intérieure 16 de manière à former un larmier. La gorge intérieure 16 est disposée entre la surface cylindrique extérieure 6 de tambour 2 de frein et la languette 13 du plateau 3 de frein. La gorge intérieure 16 est ici de forme demi-circulaire. En variante, il reste possible de prévoir une forme différente de gorge intérieure 16, par exemple, une forme elliptique, triangulaire ou rectangulaire.

De préférence, le tambour 2 de frein a un diamètre extérieur inférieur ou égal à 300 mm aux tolérances de fabrication près et la piste de freinage 8 a un diamètre sensiblement égal à 254 mm.

## Revendications

1. Ensemble (1) de freinage pour véhicule comprenant un tambour (2) de frein destiné à être solidaire d'une roue du véhicule et muni d'une surface cylindrique extérieure (6) et d'une piste de freinage (8) formée par une surface cylindrique intérieure (7) opposée à la surface cylindrique extérieure (6), et un plateau (3) de frein comprenant une portion (11) d'extrémité radiale externe orientée sensiblement radialement et disposé en regard dudit tambour (2) de frein d'un côté intérieur du véhicule, **caractérisé en ce que** la surface cylindrique extérieure (6) s'étend vers le côté intérieur du véhicule de manière à couvrir une face (12) d'extrémité radiale externe de la portion (11) d'extrémité radiale externe du plateau (3) de frein.

2. Ensemble (1) de freinage selon la revendication 1, dans lequel la surface cylindrique extérieure (6) couvre intégralement la face (12) d'extrémité radiale externe de la portion (11) d'extrémité radiale externe du plateau (3) de frein.

3. Ensemble (1) de freinage selon la revendication 1 ou 2, dans lequel le plateau (3) de frein est muni d'une languette (13) comprenant une partie de fixation (13a) fixée rigidement sur la portion (11) d'extrémité radiale externe et une partie en console (13b) s'étendant axialement dans une chambre (14) de réception formée à partir d'une surface latérale (15) du tambour (2) de frein.

4. Ensemble (1) de freinage selon la revendication 3, dans lequel la languette (13) comprend un rebord (13c) s'étendant radialement vers la surface cylindrique extérieure (6) du tambour (2) de frein.

5. Ensemble (1) de freinage selon la revendication 3 ou 4, dans lequel la partie en console (13b) s'étend radialement dans la chambre (14) de réception.

6. Ensemble (1) de freinage selon l'une quelconque des revendications 3 à 5, dans lequel la chambre de réception (14) est munie d'une gorge intérieure (16) de manière à former un larmier.

7. Ensemble (1) de freinage selon la revendication 6, dans lequel la gorge intérieure (16) est disposée entre la surface cylindrique extérieure (6) du tambour (2) de frein et la languette (13) du plateau (3) de frein.

8. Ensemble (1) de freinage selon l'une quelconque des revendications 1 à 7, dans lequel le tambour (2) de frein a un diamètre extérieur inférieur ou égal à 300 mm.

9. Ensemble (1) de freinage selon l'une quelconque des revendications 1 à 8, dans lequel la piste de freinage (8) a un diamètre sensiblement égal à 254 mm.

10. Véhicule muni d'au moins un ensemble (1) de freinage selon l'une quelconque des revendications 1 à 9.
